**Europäisches Patentamt**

**European Patent Office**

**Office européen des brevets**

(19)

(11) **EP 1 071 043 A2**

(12) **EUROPÄISCHE PATENTANMELDUNG**

(43) Veröffentlichungstag:
24.01.2001 Patentblatt 2001/04

(51) Int. Cl.⁷: $G06T\ 7/00$

(21) Anmeldenummer: 00250187.2

(22) Anmeldetag: 15.06.2000

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **21.07.1999 DE 19934904**

(71) Anmelder:
**Deutsches Zentrum für Luft- und Raumfahrt e.V.
53175 Bonn (DE)**

(72) Erfinder:
**Jahn, Herbert, Prof. Dr.
12487 Berlin (DE)**

(74) Vertreter:
**Effert, Bressel und Kollegen
Radickestrasse 48
12489 Berlin (DE)**

(54) **Verfahren und Vorrichtung zur Bildzuordnung**

(57)    Die Erfindung betrifft ein Verfahren und eine Vorrichtung zur Bildzuordnung mindestens zweier Bilder einer Szene, wobei die Bilder bildpunktförmig vorliegen, umfassend folgende Verfahrensschritte:

a) Auswählen mindestens eines Bildmerkmals und
b) Bestimmen einer Verschiebung in x- und y-Richtung für jeden einzelnen Bildpunkt des einen Bildes derart, daß der Bildpunkt mit einem der Verschiebung entsprechenden Bildpunkt des anderen Bildes hinsichtlich des Bildmerkmals eine maximale Übereinstimmung aufweist, wobei bei der Bestimmung der Verschiebung geometrische Randbedingungen berücksichtigt werden.

Fig. 1

**Beschreibung**

Die Erfindung betrifft ein Verfahren und eine Vorrichtung zur Bildzuordnung mindestens zweier Bilder einer Szene.

Die Bildzuordnung (image matching) ist ein wichtiges Problem der Bildverarbeitung, das sich beispielsweise bei der Stereokonstruktion von Szenen stellt. Infolgedessen gibt es eine sehr große Reihe von Arbeiten, die sich dieser Aufgabe widmen. In letzter Zeit spielen vor allem merkmalsbasierte Verfahren eine Rolle, die zunächst mit Hilfe von Interestoperatoren ausgezeichnete Punkte in beiden (oder mehreren) Bildern finden, die relativ leicht mittels Korrelations-techniken oder verwandten flächenbasierten Verfahren zugeordnet werden können (F. Lang, W. Förstner; Matching Techniques; in: Third Course in Digital Photogrammetry; Chapter 5; institut für Photogrammetrie Universität Bonn und Landesvermessungsamt Nordrhein-Westfalen, 9.-13. Februar 1998; R. Klette, K. Schlüns, A. Koschan; Computer Vision; Springer— Verlag, Singapur 1998; H.-P. Bähr, Th. Vögtle; Digitale Bildverarbeitung; Wichmann, Karlsruhe 1991). In den übrigen Bildpunkten muß dann die Zuordnung mittels Interpolation realisiert werden. Diese Methoden erreichen oft eine gute Qualität. Es gibt aber zuweilen Schwierigkeiten in quasiperiodischen Bildregionen oder bei starker Verdeckung von Objektteilen in einigen der verwendeten Bilder. Meist benutzen die Methoden sequentielle Algorithmen, die der erzielbaren Verarbeitungsgeschwindigkeit prinzipielle Grenzen setzen.

Im Gegensatz hierzu verwendet das visuelle System des Menschen, nachfolgend kurz Auge genannt, zur Lösung dieses Problems parallel-sequentielle Algorithmen, die in schichtartigen Neuronenstrukturen realisiert sind und das Ergebnis praktisch sofort liefern ( D. H. Hubel; Eye, Brain, and Vision; Scientific American Library; New York 1995).

Der Erfindung liegt daher das technische Problem zugrunde, ein Verfahren und eine Vorrichtung zur Durchführung des Verfahrens zur Bildzuordnung zu schaffen, das parallel-sequentiell umsetzbar ist und dadurch höhere Bildverarbeitungsgeschwindigkeiten ermöglicht.

Die Lösung des technischen Problems ergibt sich durch die Merkmale der Patentansprüche 1 und 13. Weitere vorteilhafte Ausgestaltungen der Erfindung ergeben sich aus den Unteransprüchen.

Durch die bildpunktweise Berechnung einer bildpunktspezifischen Verschiebung derart, daß die zueinander korrespondierenden Bildpunkte in den Originalbildern eine maximale Übereinstimmung aufweisen, läßt sich das Verfahren vollständig parallelisieren, wobei alle Bildpunkte gleichberechtigt behandelt werden. Dies führt dazu, daß als Ergebnis des Verfahrens die Verschiebung in jedem Bildpunkt zur Verfügung steht und eine nachträgliche Interpolation entfällt. Durch die Berücksichtigung geometrischer Randbedingungen werden Mehrdeutigkeiten reduziert und der Verfahrensablauf weiter beschleunigt.

Zur Bestimmung der maximalen Übereinstimmung kommen vorzugsweise rekursive Iterationsverfahren zur Anwendung.

Als Bildmerkmale, deren Übereinstimmungen durch Verschiebung ermittelt werden, werden vorzugsweise der Grauwert und dessen Gradienten herangezogen, wobei dann die maximale Übereinstimmung für die Kombination der Merkmale bestimmt wird, wobei darüber hinaus die einzelnen Merkmale unterschiedlich gewichtet werden können. Als geometrische Randbedingung wird vorzugsweise die normal mögliche Größe der Verschiebung und/oder die Reihenfolge der Bildpunkte berücksichtigt.

In einer weiteren bevorzugten Ausführungsform wird eine pyramidenartige Struktur mit den Ebenen $p = 0,1,...,p_{max}$ von $p=pmax$ zu $p=0$ absteigend derart gebildet, daß in den Ebenen $p \neq 0$ mit durch Faltung der Originalbilder erzeugten geglätteten Bildern das Verfahren wiederholt wird, so daß ein dem menschlichen Auge nachgebildetes parallel-sequentielles Verfahren durchgeführt wird. Aufgrund der Glättung werden beispielsweise scharfe Kanten verschmiert, so daß in den Originalbildern noch vorhandene Mehrdeutigkeiten anhand der unterschiedlichen Gradienten in den geglätteten Bildern beseitigbar sind.

Vorzugsweise erfolgt die Glättung mit einer Gauß-Funktion, deren Standardabweichung mit p wächst.

In einer weiteren bevorzugten Ausführungsform werden die Bilder in den Ebenen $p \neq 0$ unterabgetastet, wobei die Unterabtastung mit p steigt, so daß die Anzahl der zu verarbeitenden Daten reduziert wird.

Weiter kann, insbesondere bei beschränkter Rechenleistung, das Verfahren abschnittsweise durchgeführt werden, das heißt für jeden Abschnitt erfolgt das Verfahren parallel, wobei die Abschnitte seriell abgearbeitet werden.

Zur Durchführung des Verfahrens können prinzipiell bekannte Personalcomputer oder Workstations verwendet werden, wobei dann das Verfahren seriell durchgeführt wird. Bei Verwendung von Parallelrechnern sind verschiedene Implementationen denkbar, wobei vorzugsweise das Bild in soviel Abschnitte unterteilt wird wie Prozessoren parallel geschaltet sind, wobei dann parallel die Abschnitte analog einer Workstation bearbeitbar sind.

Vorzugsweise wird das Verfahren in einem neuronalen Netzwerk implementiert, das eine vollständig parallel-sequentielle Bearbeitung nahezu in Echtzeit erlaubt. Das neuronale Netzwerk umfaßt dabei eine Anzahl von Neuronenebenen, wobei die Anzahl der Neuronen pro Ebene durch die Bildpunkte und die Anzahl der Ebenen durch die Anzahl der Iterationsniveaus festgelegt ist.

Die Erfindung wird nachfolgend anhand eines bevorzugten Ausführungsbeispiels näher erläutert. Die Fig. zeigen:

Fig.1      eine schematische Darstellung der neuronalen Verbindungen eines Neurons i eines Niveaus t + 1 mit den Neuronen eines Niveaus t bei der Implementierung des Verfahrens in einem neuronalen Netz,

Fig. 2     eine schematische Seitenansicht eines Objekts,

Fig. 3     Grauwertprofile zweier Bilder des Objekts gemäß Fig. 2,

Fig. 4     eine Überlagerung eines Grauwertprofils mit einem verschobenen Grauwertprofil,

Fig. 5     eine Darstellung der berechneten Verschiebung zwischen den Grauwertprofilen,

Fig 6      ein reales Nadirbild $g_L$ einer Szene,

Fig. 7     ein reales Rückwärtsbild $g_R$ einer Szene,

Fig. 8     ein mit den berechneten Parallaxen beaufschlagtes Rückwärtsbild gemäß Fig. 7,

Fig. 9     die Grauwertprofile der Fig 6 und 7 vor der Bildzuordnung und

Fig. 10    die Grauwertprofile der Fig 6 und 7 nach der Bildzuordnung.

Die nachfolgenden Überlegungen und Verfahrensschritte werden zunächst für zwei Bilder für epipolare Geometrie erläutert, um eine einfache Darstellung zu gewährleisten.

Sei $g_L(i,j)$, $g_R(i,j)$ (i=1,...$N_x$; j=1,...,$N_y$) ein Bildpaar, wobei L für linkes Auge und R für rechtes Auge steht. Im Falle von Zeilenscanner — Bildern sind hierunter z.B. Nadir- und Vorwärtsbild zu verstehen; bei anderen Anwendungen können es zwei beliebige Bilder einer Szene sein, insbesondere auch zeitlich aufeinanderfolgende Aufnahmen oder gleichzeitige Aufnahmen mit zwei Kameras. Zwischen einander entsprechenden Objektpunkten beider Bilder soll eine Verschiebung in x — Richtung bestehen, d.h. es soll gelten:

$$g_L(i,j) = g_R(i + s,j)$$

Hierbei sei $s = s(i,j)$ die Verschiebung in x — Richtung, die prinzipiell in jedem Punkt (i,j) einen anderen Wert haben kann. Da wegen der epipolaren Geometrie keine Verschiebung in y — Richtung vorhanden ist, ist die Bestimmung der Verschiebung s ein eindimensionales Problem, das für jede Bildzeile j gesondert gelöst werden muß. Aus diesem Grunde soll die Koordinate j im Folgenden weggelassen werden.

Aufgrund von Beleuchtungsänderungen, die unterschiedliche Ursachen haben können, gilt Gleichung (1) im allgemeinen nicht exakt. Vielmehr müßte ein Faktor $c(i)$ berücksichtigt werden, der diesen Änderungen Rechnung trägt. Dies soll hier vernachlässigt werden. Es soll lediglich vorausgesetzt werden, daß beide Bilder in ihrer Helligkeit global aufeinander abgestimmt sind. Dies kann zum Beispiel dadurch gewährleistet werden, daß durch lineare Grauwerttransformation ihre Grauwertmittelwerte und —varianzen auf gleiche Werte gebracht werden.

Es ist klar, daß Gleichung (1) nur gelten kann, wenn die gleiche Information in beiden Bildern vorhanden ist, d.h. wenn jeder Objektpunkt, der in $g_L$ zu sehen ist, auch in $g_R$ beobachtet werden kann. Dies bedeutet, daß Gleichung (1) dort nicht gilt, wo es Bildregionen gibt, die in einem der beiden Bilder aufgrund von Verdeckungen nicht vorhanden sind. Es wird später aber noch erläutert, daß das Verfahren auch bei Anwesenheit von verdeckten Objekten durchaus vernünftige Resultate liefert, obwohl es hierfür zunächst nicht vorgesehen ist. Zunächst soll jedoch angenommen werden, daß keine verdeckten Objekte vorhanden sind.

Um die Verschiebung s(i) zu bestimmen, muß man in jedem Punkt i die Nullstelle (oder das absolute Minimum) der Funktion

$$F_i(s) = \lfloor g_L(i) - g_R(i + s) \rfloor^2$$

$$(2)$$

suchen. Zur Reduzierung von Mehrdeutigkeiten kann die Funktion $F_i$ durch weitere Bildmerkmale, die aus den Original-Grauwertbildern gewonnen werden können, ergänzt werden:

$$F_i(s)=[g_L(i) - g_R(i + s)]^2 + \kappa \bullet [\nabla_x g_L(i) - \nabla_x g_R(i + s)]^2 \qquad (3)$$

In Gleichung (3) ist $\nabla_x g$ die erste Ableitung der Funktion $g$ nach x, z.B. $\nabla_x g \approx g(i+1) - g(i)$. Die Verwendung höherer Ableitungen oder anderer Merkmalsbilder ist selbstverständlich auch möglich, wird hier aber nicht betrachtet. Zur Erhöhung der Leistungsfähigkeit des Verfahrens können auch lokale, gewichtete Mittelwerte der Funktion $F_i(s)$ verwendet werden, wobei die Wichtung von den Glätteeigenschaften der Funktionen $g_L$, $g_R$ im betrachteten Mitteilungsfenster abhängen kann.

Zur Lösung der Aufgabe kann auf ein großes Reservoir von Suchverfahren zurückgegriffen werden. Man kann z.B. die Newtonsche Methode der iterativen Bestimmung von Nullstellen verwenden. Dann kann jedem Punkt i (parallel) $s(i)$ iterativ durch

$$s_{t+1}(i) = s_t(i) + \Delta s_t(i), \qquad \Delta s_t(i) = -\frac{F_i(s_t(i))}{F_i''(s_t(i))} \tag{4}$$

mit der Anfangsbedingung $s_0(i)=0$ bestimmt werden. Eine andere Möglichkeit ist die Anwendung der Methode des steilsten Abstiegs (steepst descent), die auf $\Delta s_t(i) \sim -F_i'(s_t(i))$ hinausläuft. Generell ist $\Delta s_t(i)$ als Funktion von $F_i(s_t(i))$ und $F_i'(s_t(i))$, oder noch allgemeiner als Funktion der $g_L(i')$, $g_R(i''+s_t(i''))$ mit $i'$, $i''$ aus einer gewissen Umgebung von $i$, zu wählen. Hier soll, da es zunächst nur um die Demonstration der Methode geht, Gleichung (4) verwendet werden. In Gleichung (4) ist $t$ eine ganze Zahl (diskrete Zeit), die die Werte t=0,1,2,... annimmt.

Die in Gleichung (4) benötigten Funktionswerte $F(s)$ und $F'(s)$ können nicht unmittelbar auf der Basis von Gleichung (3) berechnet werden, da $s$ eine reelle Zahl ist, die Funktionen $g_L$ und $g_R$ sowie ihre ersten Ableitungen aber nur an diskreten Stellen i zur Verfügung stehen. Man kann sich hier z.B. so behelfen, daß, wenn i+s zwischen i' und i'+1 liegt, $g_R(i+s)$ durch lineare Interpolation aus $g_R(i')$ und $g_R(i'+1)$ bestimmt wird. $g_R'(i+s)$ läßt sich dann aus dem Anstieg der Interpolationsgeraden, die durch $g_R(i')$ und $g_R(i'+1)$ geht, gewinnen. Natürlich können auch bessere Interpolationen, die mehr als zwei Bildpunkte in der Umgebung von i+s verwenden, benutzt werden.

Gleichung (4) ist, im Gegensatz zu den flächenbasierten Methoden, ein punktweise arbeitendes Verfahren. Man braucht deshalb keine Annahmen bezüglich Fenstergrößen, geometrischer Verzerrungen (die z.B. durch affine Transformationen mit mehreren Parametern beschrieben werden können) usw. zu machen. Es ist aber klar, daß Gleichung (4), unabhängig auf jeden Punkt i angewendet, im allgemeinen keine vernünftigen Ergebnisse liefern wird, da die Lösung der Gleichung $F_i(s)=0$ bzw. das Minimum von $F_i(s)$ meist nicht eindeutig sind. Man muß deshalb Zusatzbedingungen verwenden, die diese Mehrdeutigkeit einschränken oder, im Idealfall, beseitigen. In R. Klette, K. Schlüns, A. Koschan; Computer Vision; Springer — Verlag, Singapur 1998 sind eine Reihe derartiger Bedingungen formuliert worden, die Forderungen an die Grauwerte und die zulässigen Verschiebungen stellen. Hier wird zum Zwecke der Reduzierung von Mehrdeutigkeiten eine Forderung an die zulässigen Größen der Verschiebungen s(i), bzw. die Reihenfolge der Bildpunkte i+s(i) gestellt, die auch als „ordering constraint" bezeichnet wird und die folgendermaßen formuliert werden kann:

$$i-1+s(i-1) \leq i+s(i) \leq i+1+s(i+1) \tag{5}$$

Gleichung (5) bedeutet, daß bei der Verschiebung der Grauwerte $g_R(i)$ ($i \rightarrow i + s(i)$) ihre ursprüngliche Reihenfolge nicht verletzt werden darf; der Abstand

$$d(i) = 1+s(i+1) - s(i) \tag{6}$$

aufeinanderfolgender Bildpunkte i',

$$i'+1 \; (i' = i+s(i))$$

muß immer nicht-negativ sein. Die Bedingung in Gleichung (5) kann in 3D-Bildpaaren verletzt sein, wenn es in den betrachteten Szenen Objekte gibt, die, von den Kameras aus betrachtet, vor anderen Gegenständen angeordnet sind, so daß man gewissermaßen hinter ihnen durch gucken kann (ein Beispiel hierfür ist in R. Klette, K. Schlüns, A. Koschan; Computer Vision; Springer — Verlag, Singapur 1998 angegeben). Derartige Fälle treten nicht auf, wenn die betrachtete Oberfläche stetig ist, und dies ist in vielen Fällen (z.B. in der Luftbild-Photogrammetrie) in der überwiegenden Zahl aller Bildpunkte gewährleistet.

Die Bedingung in Gleichung (5) wird bisher selten zur Verbesserung von Bildzuordnungsverfahren verwendet. Eine Ausnahme bildet der auf dynamischer Programmierung basierende Stereoalgorithmus von Gimel'farb, mit dem gute Ergebnisse erzielt werden. Dieser Algorithmus ist allerdings inhärent sequenziell und arbeitet nur bei epipolarer Geometrie.

Die Bedingung in Gleichung (5) muß in jedem Iterationsschritt erfüllt werden. Um dies zu gewährleisten, muß die Schrittweite $\Delta s_t(i)$ in Gleichung (4) nach oben begrenzt werden. Wenn z.B. $\Delta s_t(i) > 0$ ist, dann wird der Punkt $i+s_t(i)$ nach rechts verschoben. Damit in Gleichung (5) auch dann erfüllt bleibt, falls der nächste Punkt $i+1+s_t(i+1)$ nach links verschoben wird, darf $\Delta s_t(i)$ nicht größer als $d(i)/2$ sein. Mit dieser Modifikation hat der Zuwachs $\Delta s_t(i)$ in Gleichung (4) folgende Werte:

$$\Delta s_t(i) = \begin{cases} d_t(i)/2, & \text{wenn} \quad -\dfrac{F_i(s_t(i))}{F_i'(s_t(i))} > d_t(i)/2 \\[2ex] -d_t(i-1)/2, & \text{wenn} \quad -\dfrac{F_i(s_t(i))}{F_i'(s_t(i))} < -d_t(i-1)/2 \\[2ex] -\dfrac{F_i(s_t(i))}{F_i'(s_t(i))} & \text{sonst} \end{cases} \tag{7}$$

Um Singularitäten zu vermeiden, wird Gleichung (7) noch dahingehend ergänzt, daß $\Delta s_t(i) = 0$ sein soll, falls $F_i'(s_t(i)) = 0$ ist. Man kann auch gut Apriori — Information über die Verschiebungen $s$ (falls vorhanden) einbauen. Wenn man z.B. weiß, daß immer $s(i) \geq 0$ sein muß, dann kann man auftretende negative Werte $s_t(i)$ zu Null setzen. Dies zwingt die iterativ berechneten Verschiebungen in die a priori vorgegebene Richtung.

Bei Verwendung von Gleichung (7) sind die Verschiebungen $s_{t+1}(i)$ (i=1,2,...), obwohl sie in jedem Iterationsschritt parallel berechnet werden können, nicht mehr unabhängig voneinander, sondern durch ein starkes inneres Band verbunden. Hierdurch wird gewährleistet, daß auch in Regionen, wo keine starken Grauwertänderungen vorhanden sind (und Interestoperatoren nicht ansprechen), vernünftige Verschiebungswerte erhalten werden.

Zur weiteren Reduzierung der Mehrdeutigkeiten und zur Beschleunigung der Verarbeitung wird eine Pyramidenstruktur mit den Ebenen $p = 0,1,2,...,p_{max}$ eingeführt. $p = 0$ ist die Originalbildebene. In der Ebene $p \neq 0$ werden geglättete Bilder verwendet, die durch Faltung der Originalbilder $g_L$ und $g_R$ mit dem Kern

$$f_p(i) = \frac{1}{\sigma_p \sqrt{2\pi}} \exp\left[-\frac{i^2}{2\sigma_p^2}\right] \tag{8}$$

oder einer ähnlich glättenden Funktion erhalten werden. Die Standardabweichung $\sigma_p$ muß mit $p$ wachsen, damit zwischen den geglätteten Bildern $g_{L,p}$ und $g_{R,p}$ eine gute Korrelation über viele Pixel entsprechend der maximal auftretenden Parallaxe hinweg erzielt wird. Nur so kann der iterative Algorithmus in die Nähe der wahren Verschiebung kommen. Es hat sich experimentell gezeigt, daß oft

$$\sigma_p = 2^p \quad \text{(p=1,2,...,Pmax)} \tag{9}$$

eine gute Wahl ist. Man kann das Verfahren nun in folgender Weise formulieren:

$s_E(i)=0$ *(i=1,...,N_x)*

For $p=p_{max}$ step –1 until 0 do          BEGIN

1. Erzeugung der geglätteten Bilder $g_{L,p}$ und $g_{R,p}$ durch Faltung der Originalbilder $g_L$ und $g_R$ mit dem Kern $f_p$ (8) und Bildung der ersten Ableitungen von $g_{L,p}$ und $g_{R,p}$

2. Iteration:

    Anfangsbedingung: $s_0(i)=s_E(i)$

    For $t=0$ until $t_{max}(p)$ do Berechnung der $s_{t+1}(i)$ nach (4), (7).

    Ergebnis: $s_E(i)=s_{tmax(p)+1}(i)$ (i=1,...,N_x)

                                                    END

Im Ergebnis dieser Prozedur steht das Endergebnis in Form der Verschiebungen $s_E(i)$ *(i=1,...,N_x)* zur Verfügung.

Dieses Verfahren funktioniert, es hat aber den Nachteil, daß es aufgrund der Begrenzung der Schrittweite auf maximal $d_t/2$ (siehe Gleichung (7)) sehr langsam ist. Zur Beschleunigung des Verfahrens kann man sich so behelfen, daß man die geglätteten Bilder $g_{L,p}$ und $g_{R,p}$, wie in Pyramidenstrukturen üblich, für $p>0$ unterabtastet. D.h. für p=1 verwendet man nur jeden zweiten Bildpunkt, für p=2 jeden vierten usw.. Wenn $N_x=2^m$ ist, dann haben die Bilder $g_{L,p}$ und $g_{R,p}$ $N_x(p)=2^{m-p}$ Bildpunkte. Beginnt man mit der Iteration z.B. auf der Ebene $P_{max}=2$, dann ist der Abstand der Bildpunkte, bezogen auf das Originalbild jetzt 4, und der Algorithmus kann am Anfang Schritte der Größe 2 machen (anstelle von ½ für $p_{max}=0$). Damit wird das Verfahren enorm beschleunigt. Es entsteht aber die Schwierigkeit, daß beim Übergang von $p$ nach $p-1$ nur jeder zweite Verschiebungswert als Anfangswert für die Iteration zur Verfügung steht. Den dazwischenliegenden Wert kann man durch Bildung eines geeigneten (beispielsweise kantenerhaltenden) Mittelwertes interpolieren. Damit wird sichergestellt, daß die Bedingungen von Gleichung (5) nicht verletzt werden. Wie später noch erläutert wird, ist das Verfahren durch die Erfüllung der Bedingungen (5) und seine Pyramidenstruktur so leistungsfähig, daß auch bei Bildpaaren mit sehr unangenehmen Eigenschaften (teilweise Verdeckungen, sehr große Parallaxen, quasiperiodische Texturen) brauchbare Ergebnisse erhalten werden. Allerdings bleiben noch Restfehler, deren Ursachen erforscht und durch Modifikation von (4), (7) beseitigt werden müssen.

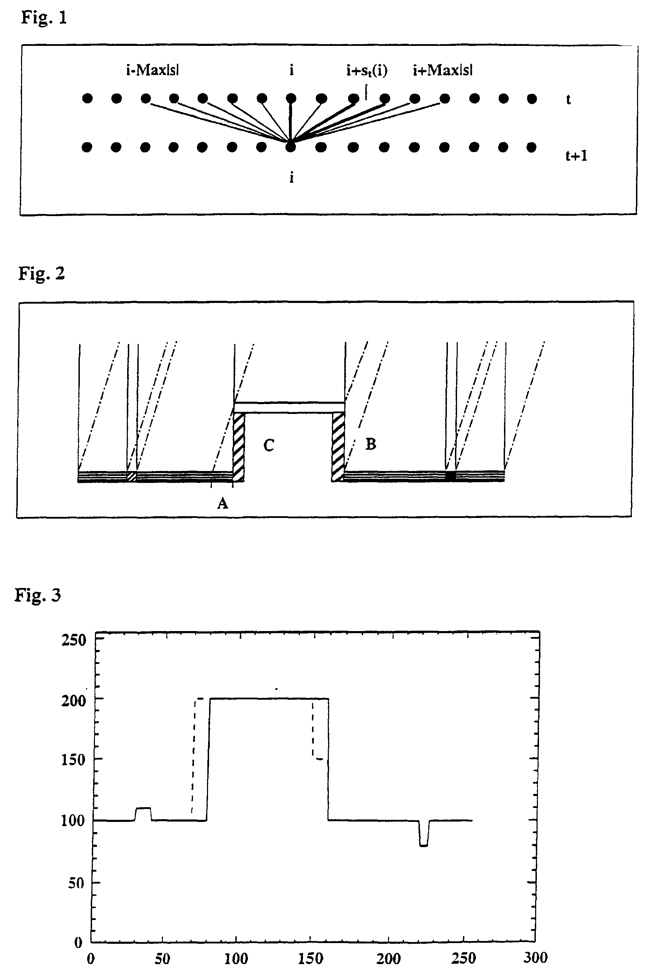

Das Verfahren gemäß der Gleichung (4) und (7) ist ein parallel-sequentielles Verfahren. Parallel bedeutet hier, daß die Verarbeitung für jeden Bildpunkt $i$ gesondert, und insbesondere parallel zu allen anderen, durchgeführt werden kann. Kein Bildpunkt ist vor einem anderen ausgezeichnet. Die sequentielle Komponente des Algorithmus ist der Übergang von $t$ nach $t+1$ und von $p$ nach $p-1$, der für alle Bildpunkte gleichzeitig erfolgen kann. Das Verfahren kann somit in einem Prozessornetzwerk implementiert werden, in dem jedem Bildpunkt $i$ eines Verarbeitungsniveaus $p,t$ ein Prozessor („Neuron") zugeordnet ist. Die Iterationsniveaus $p,t$ können durch Änderung des Zustandes $s_t(i)$ ein und desselben Neurons, aber auch als neuronale Schichten, denen eigene Neuronen zugeordnet sind, realisiert werden. Beim Übergang von $t$ nach $t+1$ hätte man in letzterem Fall die in Fig. 1 skizzierte Struktur. Neuron $i$ des Niveaus (Neuronenschicht) $t+1$ ist hierbei mit allen Neuronen der Schicht $t$ verbunden, deren Verschiebung gegenüber $i$ geringer als die a priori maximal mögliche Verschiebung Max$|s|$ ist (dies entspricht der Einhaltung der sogenannten „disparity limit constraint", ). Jedes Neuron $i$ (in Fig. 1 durch einen schwarzen Kreis dargestellt) hat Zugriff auf die Grauwerte $g_{L,p}(i)$ und $g_{R,p}(i)$ und deren erste Ableitungen. Zur Berechnung der Funktionswerte $F_i(s_t(i))$ und $F_i'(s_t(i))$ greift Neuron $i,t+1$ auf die drei Neuronen $j,t$ zurück, deren Verbindungen mit Neuron $i,t$ durch dicke Verbindungslinien gekennzeichnet sind.

Bei einer hardware-mäßigen Umsetzung dieser Struktur in einem neuronalen Netz läßt sich die Bildzuordnung nahezu in Echtzeit realisieren.

Durch Wahl der Funktion $F_i(s)$ in Gleichung (2) als Ausgangspunkt der Betrachtungen wird bei der Berechnung der ersten Ableitung $F_i'(s)$ nur das rechte Bild $g_R(i+s)$ und seine erste Ableitung nach $s$ differenziert. Hierdurch entsteht eine Unsymmetrie, die man beheben kann, wenn man anstelle von $F_i(s)$ die symmetrische Funktion

$$f_i(s) = [g_L(i - s/2) - g_R(i+s/2)]^2 + k \cdot [...]^2 \tag{10}$$

verwendet. Hierdurch tritt eine Verlangsamung ein, da die erste Ableitung $f'$ nun von $g_L$ und $g_R$ sowie ihren ersten Ableitungen gebildet werden muß. Es ist aber zu vermuten, daß in der Qualität eine gewisse Verbesserung zu erzielen ist, da man weniger häufig auf verschwindende erste Ableitungen stoßen wird. Dies muß aber noch genauer untersucht werden.

Wenn keine epipolare Geometrie vorliegt, was beispielsweise bei Flugzeug-Zeilenscannerbildern aufgrund der Fluglageschwankungen der Fall ist, muß man Verschiebungen in x- und y- Richtung zulassen. Zur Behandlung dieses Falles sind nur geringfügige Modifikationen erforderlich. Anstelle von Gleichung (2) hat man jetzt die Nullstellen bzw. das Minimum der Funktion

$$F_{i,j}\left(s_x, s_y\right) = \left\lfloor g_L(i,j) - g_R\left(i+s_x, j+s_y\right)\right\rfloor^2 + k \cdot \left\lfloor \nabla_x g_L(i,j) - \nabla_x g_R\left(i+s_x, j+s_y\right)\right\rfloor^2$$
$$+ k \cdot \left[\nabla_y g_L(i,j) - \nabla_y g_R\left(i+s_x, j+s_y\right)\right]^2$$

$$(11)$$

zu suchen. Hierbei sind $s_x$ und $s_y$ Funktionen von $(i,j)$. Gleichung (4) geht nun über in

$$s_{x,t+1}(i,j) = s_{x,t}(i,j) + \Delta s_{x,t}(i,j), \qquad (12)$$

$$s_{y,t+1}(i,j) = s_{y,t}(i,j) + \Delta s_{y,t}(i,j)$$

mit

$$\Delta s_{x,t}(i,j) = \begin{cases} d_{x,t}(i,j)/2, & \text{wenn} & -\dfrac{F_{i,j}(s_{x,t}(i,j), s_{y,t}(i,j))}{F'_{i,j}(s_{x,t}(i,j), s_{y,t}(i,j))} > d_{x,t}(i,j)/2 \\[3mm] -d_{x,t}(i-1,j)/2, & \text{wenn} & -\dfrac{F_{i,j}(s_{x,t}(i,j), s_{y,t}(i,j))}{F'_{i,j}(s_{x,t}(i,j), s_{y,t}(i,j))} < -d_{x,t}(i-1,j)/2 \\[3mm] -\dfrac{F_{i,j}(s_{x,t}(i,j), s_{y,t}(i,j))}{F'_{i,j}(s_{x,t}(i,j), s_{y,t}(i,j))} & \text{sonst} \end{cases}$$

$$(13)$$

Dabei ist $d_{x,t}(i,j) = 1 + s_{x,t}(i+1,j) - s_{x,t}(i,j)$ ; $F'$ kennzeichnet die partielle Ableitung nach $s_x$.

Die entsprechende Gleichung für $\Delta s_{y,t}(i,j)$ läßt sich analog aufstellen. Zur Berechnung der in Gleichung (13) benötigten Werte der Funktionen der Funktionen $F$ und $F'$ kann man nun wie folgt vorgehen: Seien $(i',j')$, $(i'+1,j')$, $(i',j'+1)$, $(i'+1,j'+1)$ die vier Punkte, die das Quadrat begrenzen, in dem der Punkt $(i+s_{x,t}(i,j), j+s_{y,t}(i,j))$ liegt, in welchem die benötigten Werte von $g_R(i+s_{x,t}(i,j), j+s_{y,t}(i,j))$ und seiner partiellen Ableitungen berechnet werden müssen. Bilineare Interpolation der Art

$$g_R(x,y) \approx a + bx + cy + dxy \qquad (14)$$

liefert dann $g_R(i+s_x, j+s_y)$ und die partiellen Ableitungen dieser Funktion nach $s_x$ und $s_y$. Einfacher ist die Rundung der Real-Zahlen $i+s_x$, $j+s_y$ auf Integer-Werte. Dann können die benötigten Funktionswerte aus den vorhandenen Feldern entnommen und die ersten Ableitungen, wie gewöhnlich, durch Differenzen benachbarter Werte geschätzt werden. Diese Methode ist schneller und liefert fast ebenso gute Ergebnisse.

Zum Aufbau der Pyramide mit den Ebenen $p=0,1,...,p_{max}$ sollen die (quadratischen) Bilder $g_L$ und $g_R$ die Dimensionen $N_x = N_y = N = 2^m$ haben. Dann verwendet man von den geglätteten Bildern der Ebene $p$, die man durch Faltung der Originalbilder mit

$$f_p(i,j) = \frac{1}{2\pi\sigma_p{}^2} \exp\left[ -\frac{i^2 + j^2}{2\sigma_p{}^2} \right]$$

(15)

oder einer ähnlich glättenden Funktion erhält, nur die Bildpunkte $(2^p k, 2^p l)$ $(k,l=1,...,2^{m-p})$, d.h. Bilder mit den reduzierten Dimensionen $N_x(p)=N_y(p)=N(p)=2^{m-p}$ so wie es bei regulären Bildpyramiden oft üblich ist.

Die Wahl Von $p_{max}$ hängt natürlich von der im Bildpaar vorhandenen maximalen Verschiebung ab, die a priori bekannt sein muß und im allgemeinen auch bekannt ist, aber auch von der Größe vorhandener Objekte mit nahezu konstantem Grauwert. Bei derartigen Objekten wird nämlich durch die Faltung mit der Funktion $f_p$ gemäß Gleichung (15) die Verschiebung des Objekts auch in seinem Inneren deutlich gemacht, wodurch der Algorithmus in die Lage gebracht wird, auch im Inneren homogener Regionen die richtige Verschiebung zu berechnen.

Um die bei der Bilddatenzuordnung auftretenden Probleme und das Leistungsvermögen des Verfahrens zu verdeutlichen, soll zunächst ein stark vereinfachter, aber extremer Fall betrachtet werden. Fig. 2 zeigt ein einfaches Objekt, das von der Nadir- bzw. rückwärtsschauenden Zeile eines Pushbroomscanners gesehen wird (die Blickrichtungen sind gestrichelt bzw. strichpunktiert gekennzeichnet). Die Objektoberfläche hat stückweise konstante Grauwerte (durch die jeweilige Schraffur der die Oberfläche charakterisierenden Rechtecke angedeutet). Der Abschnitt A des Objekts wird vom Rückwärtssensor nicht gesehen, die senkrechte Objektwand B ist im Nadirbild nicht enthalten und die ihr gegenüberliegende Wand C kommt in beiden Bildern nicht vor. Damit sind in beiden Bildern verdeckte Objektteile vorhanden. Des weiteren hat man über weite Objektteile keine Grauwertänderung, so daß in diesen Regionen keine Stereoinformation vorhanden ist.

Die von beiden Kameras registrierten Grauwertprofile sind in Fig. 3 dargestellt (gestrichelt für den Rückwärtssensor). Man sieht, daß die Verschiebung des Objektdaches 10 Bildpunkte beträgt.

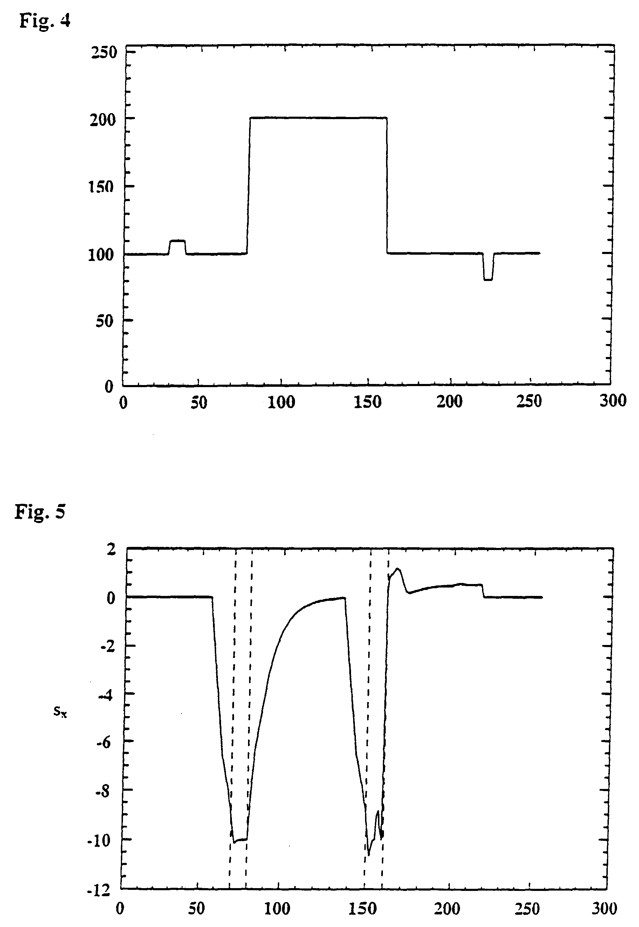

In Fig. 4 ist das linke Profil $g_L(i)$ (durchgezogene Linie) vom zugeordneten Profil $g_R(i+s(i))$ (gestrichelte Linie) überlagert.

Es ist fast kein Unterschied beider Profile zu erkennen. Der verdeckte Teil B wurde unterdrückt und das Profil $g_R(i)$ an das Profil $g_L(i)$ angepaßt (bis auf kleine Abweichungen an der rechten Kante des Objekts). Allerdings hängt dieses Ergebnis vom Grauwert in der verdeckten Region B (hier: Grauwert 150, siehe Fig. 3) ab. Ist die Region B wesentlich dunkler (<100), dann ergeben sich dort Abweichungen beider Profile. Das Verhalten des Verfahrens in der Nähe verdeckter Regionen ist deshalb noch nicht befriedigend. Die gute Zuordnung der Grauwertprofile bedeutet aber noch nicht, daß auch überall die richtige Verschiebung $s(i)$ bestimmt wurde. Diese beträgt 10 Bildpunkte im Bereich des Objektdaches; sonst ist sie Null. Das Verfahren liefert aber das in Fig. 5 dargestellte Ergebnis.

Man sieht, daß die richtige Verschiebung $s=10$ im Bereich des Daches nur teilweise (in der Nähe der Wände) richtig ermittelt wird; die Parallaxe schwankt zwischen 0 und 10. Auch außerhalb des Objekts erreicht sie nicht sofort den Wert Null, der dort richtig ist. Die Situation verbessert sich schlagartig, wenn anstelle der stückweise konstanten Grauwerte leicht veränderliche Helligkeitsverteilungen eingeführt werden. Einen Eindruck hiervon bekommt man durch die Wirkungen der hellen Region (i=30-40) und des dunklen Gebietes (bei i=220-225), die die Verschiebung auf den dort richtigen Wert Null ziehen. Bei der Untersuchung der Ergebnisse zeigte es sich auch, daß die genaue Abstimmung der Helligkeiten in beiden Bildern des Stereopaares wichtig ist. Allerdings nimmt die Bedeutung dieser Grauwertanpassung ab, wenn die Grauwertvariation stärker wird.

In realen Bildern hat man auch in Regionen, die vom Betrachter als homogen empfunden werden, im allgemeinen keine exakt konstanten Grauwerte, so daß hier eine bessere Bestimmung der Parallaxen möglich ist. Der soeben diskutierte extreme Fall zeigt aber, wo das Verfahren noch verbessert werden kann.

Im Folgenden sollen die Ergebnisse für reale Bildpaare, die mit der digitalen Stereo-Luftbildkamera WAAC (Wide Angle Airborne Camera) gewonnen wurden, vorgestellt werden.

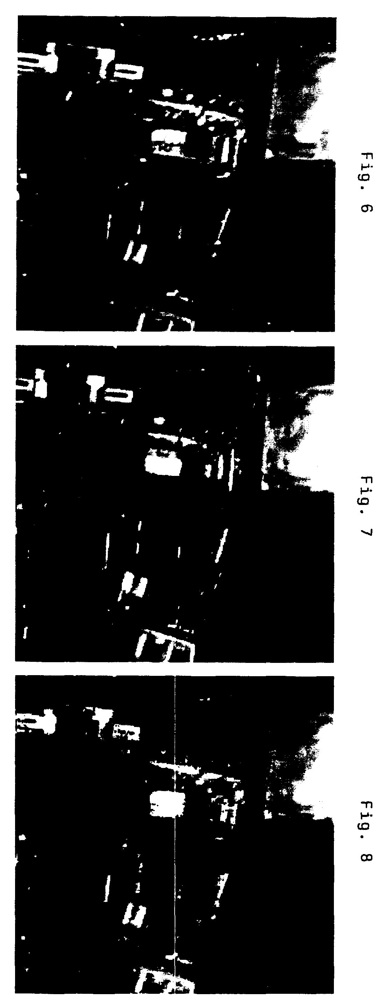

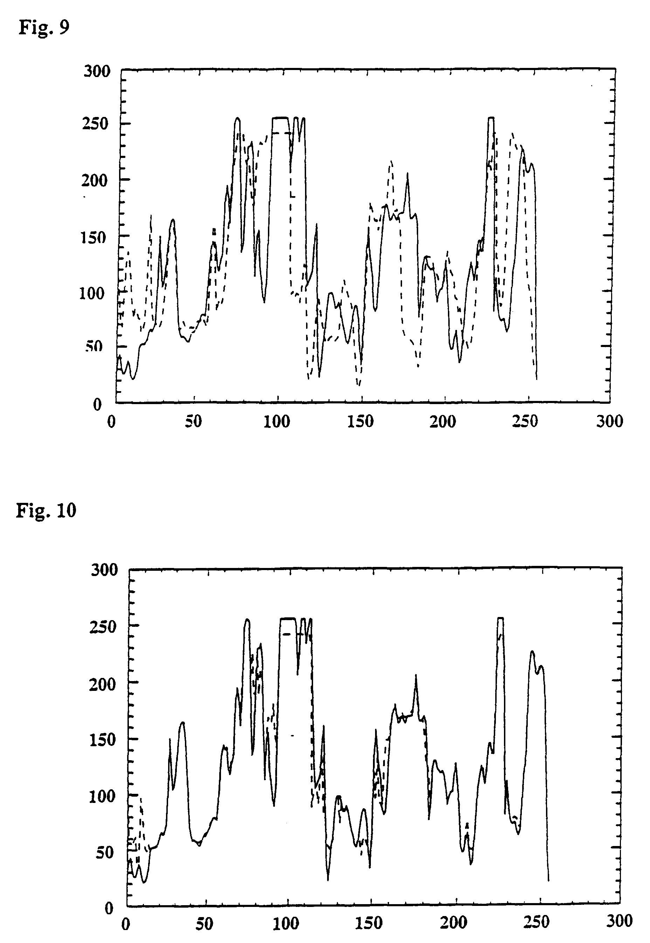

In Fig. 6 ist ein reales Nadirbild $g_L$ eines kleinen Teils des Zentrums von Berlin dargestellt, wobei unten links im Bild das Brandenburger Tor zu erkennen ist. In Fig. 7 ist ein reales Rückwärtsbild $g_L$ der Szene und in Fig. 8 das mit den berechneten Parallelachsen $s_x$, $s_y$ beaufschlagte Rückwärtsbild $g_R$ $(i + s_x(i, j), j + s_y(i, j))$ dargestellt. Die entlang der weißen horizontalen Linie auftretenden Grauwertprofile der Fig. 6 und 7 sind in Fig. 9 dargestellt, wobei das durchgezogene Profil $g_L$ (N/2, j) und das gestrichelte Profil $g_R$ (N/2, j) darstellen. Die Grauwertprofile wurden entlang der horizontalen Linie ausgewählt, da in x-Richtung die größten Parallaxen zu verzeichnen sind. Aus der Fig. 8 bzw. Fig. 10, in der die Grauwertprofile nach der Bildzuordnung dargestellt sind, ist erkennbar, daß auch stark verdeckte Objekte wie Häuserwände gut erfaßt werden. Schwierigkeiten bereiten hingegen stark bewegte Objekte wie beispielsweise Kraftfahrzeuge, falls die beiden Szenen nicht gleichzeitig aufgenommen werden.

**Patentansprüche**

1. Verfahren zur Bildzuordnung mindestens zweier Bilder einer Szene, wobei die Bilder bildpunktförmig vorliegen, umfassend folgende Verfahrensschritte:

a) Auswählen mindestens eines Bildmerkmals und

b) Bestimmen einer Verschiebung in x- und y-Richtung für jeden einzelnen Bildpunkt des einen Bildes derart, daß der Bildpunkt mit einem der Verschiebung entsprechenden Bildpunkt des anderen Bildes hinsichtlich des Bildmerkmals eine maximale Übereinstimmung aufweist, wobei bei der Bestimmung der Verschiebung geometrische Randbedingungen berücksichtigt werden.

2. Verfahren nach Anspruch 1, dadurch gekennzeichnet, daß die Verschiebung mittels eines rekursiven Iterationsverfahrens ermittelt wird.

3. Verfahren nach Anspruch 1 oder 2, dadurch gekennzeichnet, daß als Bildmerkmal der Grauwert ausgewählt wird.

4. Verfahren nach Anspruch 3, dadurch gekennzeichnet, daß zusätzlich mindestens eine weitere Ableitung der Grauwerte als Bildmerkmal ausgewählt wird, wobei dann die maximale Übereinstimmung für die Kombination der Bildmerkmale bestimmt wird.

5. Verfahren nach Anspruch 4, dadurch gekennzeichnet, daß die Bildmerkmale unterschiedlich gewichtet werden.

6. Verfahren nach einem der vorangegangenen Ansprüche, dadurch gekennzeichnet, daß als geometrische Randbedingung die maximal mögliche Größe der Verschiebung und/oder die Reihenfolge der Bildpunkte berücksichtigt werden.

7. Verfahren nach einem der vorangegangenen Ansprüche, dadurch gekennzeichnet, daß eine pyramidenartige Struktur mit den Ebenen $p=0,1..p_{max}$ von $p=p_{max}$ zu $p=0$ absteigend derart gebildet wird, daß in den Ebenen $p \neq 0$ mit durch Faltung der Originalbilder erzeugten geglätteten Bildern das Verfahren wiederholt wird.

8. Verfahren nach Anspruch 7, dadurch gekennzeichnet, daß die Originalbilder mit einem Kern der Form

$$f_p(i, j) = \frac{1}{2\pi\sigma_p^2} \exp\left[ -\frac{i^2 + j^2}{2\sigma_p^2} \right]$$

oder einer ähnlich glättenden Funktion gefaltet werden.

9. Verfahren nach Anspruch 8, dadurch gekennzeichnet, daß die Standard- abweichung mit p wächst.

10. Verfahren nach einem der Ansprüche 7 bis 9, dadurch gekennzeichnet, daß die Bilder in den Ebenen $p \neq 0$ unterabgetastet werden, wobei die Unterabtastung mit p steigt.

11. Verfahren nach einem der vorangegangenen Ansprüche, dadurch gekennzeichnet, daß die Bilder abschnittsweise unterteilt werden und das Verfahren seriell für die einzelnen Abschnitte durchgeführt wird.

12. Verwendung eines Personal Computers, einer Workstation oder eines Parallelrechners zur Durchführung des Verfahrens nach einem der vorangegangenen Ansprüche.

13. Vorrichtung zur Durchführung des Verfahrens nach Anspruch 2 oder 7, dadurch gekennzeichnet, daß die Vorrichtung eine Anzahl von miteinander vernetzten Neuronen umfaßt, die in unterschiedlichen Ebenen angeordnet sind, wobei jeder Ebene ein Iterationsniveau p, t und jedem Bildpunkt in einer Ebene genau ein Neuron zugeordnet ist.

14. Vorrichtung nach Anspruch 13, dadurch gekennzeichnet, daß jedes Neuron mit allen Neuronen der darüberliegenden Ebene verbunden ist, deren Verschiebung kleiner als die maximal mögliche Verschiebung ist.

Fig. 1

Fig. 2

Fig. 3

Fig. 4

Fig. 5

Fig. 6

Fig. 7

Fig. 8

Fig. 9

Fig. 10